# DEMANDE DE BREVET EUROPEEN

(11) **EP 1 912 340 A1**
(43) Date de publication de la demande: **16.04.2008**
(21) Numéro de dépôt: 07019980.7
(22) Date de dépôt: 12.10.2007
(51) Int. Cl.: H04B 1/69, H04Q 7/32, H04L 12/18

(54) **Procédé de gestion de conflit de fréquence entre émetteurs de services numériques et émetteurs fonctionnant selon le procédé**

(30) Priorité: 12.10.2006 FR 0608978
(71) Demandeur: SAGEM MOBILES, 75015 Paris (FR)
(72) Inventeur: Pecqueur, Rémi, 92800 Puteaux (FR)
(74) Mandataire: Maillet, Alain

(57) **Abrégé**

Ce procédé permet de gérer les conflits de fréquence pour un réseau de diffusion de services numériques se déplaçant géographiquement. De cette façon, il est possible de mettre en place des réseaux de rediffusion de contenu numérique à destination de terminaux mobiles au sein de véhicules en déplacement comme des trains, des avions ou des bus. Au cours des déplacements du véhicule, les conflits potentiels de fréquence radio entre le réseau mouvant et le réseau de rediffusion d'autres réseaux mouvants ou encore des réseaux fixes rencontrés sont gérés de façon à permettre une diffusion sûre. Le procédé se base sur la détection de flux interférents et l'élection de l'émetteur devant changer de fréquence.

## Description

### Domaine technique

L'invention concerne les réseaux de diffusion de services numériques à destination de terminaux mobiles et plus particulièrement le règlement des conflits de fréquences entre différents réseaux dans le cas où ceux-ci sont mouvants. Un réseau mouvant est un réseau dont l'émetteur peut se déplacer au cours du temps.

### Art antérieur

L'augmentation récente des demandes pour l'accès à la télévision numérique a amené la communauté scientifique à développer un système de diffusion hertzien de télévision numérique: le système DVB-T (Digital Video Broadcasting Terrestrial : télévision numérique terrestre). Le système DVB-T, défini, entre autres, par les standards ETSI EN 300 744 « Digital Vidéo Broadcasting (DVB) ; Framing structure, channel coding and modulation for digital terrestrial télévision. (DVB-T) », ETSI EN 300 468 « Digital Video Broadcasting (DVB) ; Spécification for Service Information (SI) in DVB systems. DVB-SI », est une technologie qui consiste à transmettre des flux de données numériques, telles que des données audio visuelles de type télévision qui peuvent être associées à des données numériques interactives du même type que celles qui sont transmises par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées, ainsi que des contraintes d'utilisation particulières, d'accéder à ce type de flux de services. Cette adaptation a donné lieu au système normalisé dit DVB-H (Digital Video Broadcast-Handheld) défini par le standard ETSI EN 302 304 : « Digital Video Broadcasting (DVB); Transmission System for Handheld Terminais (DVB-H) ».

Cette norme vise à permettre la diffusion de flux de services multimédias sur des terminaux mobiles qui, comme les téléphones mobiles, doivent répondre à des exigences spécifiques en terme de consommation de courant, de taille d'écran et de mobilité. Selon la norme DVB-H, les services transportés au sein d'un flux sont codés et multiplexés sur la base de la technologie MPEG-2 (Moving Picture Experts Group) système standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

Dans le cadre du développement de ces réseaux de diffusion DVB-H à destination de terminaux mobiles, il est envisagé d'offrir la diffusion des services au sein de véhicules en déplacement. Ces véhicules peuvent être, par exemple, des trains, des avions, des autobus ou même encore une automobile. Dans ce cas, un équipement est chargé de recevoir les services et de les réémettre dans le véhicule à destination de terminaux utilisés par les passagers dudit véhicule. La réception peut être, elle-même, du type DVB-H, mais elle peut aussi être une réception satellitaire ou tout type de réception de services. Les services ainsi reçus, auxquels peuvent s'adjoindre des services spécifiques à l'émission dans le véhicule, sont alors réémis selon la norme DVB-H au sein du véhicule. L'émission est donc en tout point conforme à l'émission par un réseau de diffusion DVB-H fixe classique. Nous appellerons de tels réseaux de diffusion au sein d'un véhicule un réseau mouvant dans la mesure où l'émetteur de diffusion est susceptible de se déplacer géographiquement au cours de la diffusion étant donné qu'il est monté dans un véhicule.

Il est d'usage de définir une fréquence d'émission associée à un réseau de diffusion, donc à un émetteur, dans le contexte des réseaux fixes classiques. Dans le cas d'un réseau mouvant, ceci se révèle problématique du fait du déplacement de l'émetteur et donc des modifications au cours du temps de son environnement radio. En effet, au cours de son déplacement, l'émetteur mouvant va entrer et sortir de la zone d'émission d'autres réseaux qui peuvent être des réseaux fixes ou des réseaux mouvants. Le réseau mouvant risque donc d'entrer en conflit de fréquence, c'est-à-dire de voir sa fréquence d'émission brouillée par un autre réseau émettant sur cette même fréquence ou sur une fréquence suffisamment proche pour compromettre la bonne réception des signaux émis par les terminaux destinataires. Contrairement aux réseaux fixes pouvant obéir à un plan de fréquence fixe et immuable, les réseaux mouvants doivent donc pouvoir gérer ces conflits de fréquence.

### Exposé de l'invention

Le conflit de fréquence entre différents réseaux de diffusion de services numériques à destination de terminaux mobiles est réglé de la manière suivante. Dans un premier temps, on tente d'identifier le type de réseau interférent par l'étude des descripteurs contenus dans le ou les flux qu'il diffuse. En fonction du type de réseau interférent détecté on déduit si l'on doit, ou pas, tenter un changement de fréquence.

Cette méthode permet de gérer les conflits de fréquence pour un réseau de diffusion de services numériques se déplaçant géographiquement. De cette façon, il est possible de mettre en place des réseaux de rediffusion de contenu numérique à destination de terminaux mobiles au sein de véhicules en déplacement comme des trains, des avions ou des bus. Au cours des déplacements du véhicule, les conflits potentiels de fréquence radio entre le réseau mouvant et le réseau de rediffusion d'autres réseaux mouvants ou encore des réseaux fixes rencontrés sont gérés de façon à permettre une diffusion sûre.

L'invention concerne un procédé de gestion de conflit de fréquence par un émetteur de services numériques émettant au moins un flux de données selon une première fréquence, cette émission entrant en conflit avec un second émetteur, appelé émetteur interférent, émettant au moins un flux, appelé flux interférent, comportant une étape de détermination de la présence d'un descripteur dans le flux interférent signalant l'émetteur interférent comme un émetteur capable de changer de fréquence et, dans le cas où la détermination est positive, une étape d'élection de l'émetteur devant changer de fréquence, tandis que dans le cas où la détermination est négative et dans le cas où l'émetteur se retrouve élu, une étape de changement de fréquence d'émission du flux de données.

Selon un mode particulier de réalisation de l'invention, l'émetteur possédant un plan des fréquences connues pour être utilisées, l'étape de changement de fréquence comporte une étape de choix d'une fréquence non présente dans ce plan comme nouvelle fréquence d'émission.

Selon un mode particulier de réalisation de l'invention, le procédé comporte en outre une étape de vérification que la nouvelle fréquence d'émission est bien libre.

L'invention concerne également un émetteur de services numériques comportant :
- des moyens d'émission d'au moins un flux de données selon une première fréquence ;
- des moyens de réception d'au moins un flux de données ;
- des moyens de changer la fréquence d'émission du flux ;
- des moyens de déterminer, lorsque ladite émission sur la première fréquence entre en conflit avec un second émetteur, appelé émetteur interférent, émettant au moins un flux appelé flux interférent, la présence d'un descripteur dans le flux interférent signalant l'émetteur interférent comme un émetteur capable de changer de fréquence ;
- des moyens d'élection de l'émetteur devant changer de fréquence lorsque ladite détermination est positive.

L'invention concerne également une structure de données sous la forme d'un descripteur destiné à être inséré dans un flux de données du type DVB caractérisé en ce qu'il contient au moins une information relative à la nature du réseau émetteur permettant de déduire la capacité de ce réseau de changer de fréquence.

L'invention concerne également une structure de données sous la forme d'un descripteur destiné à être inséré dans un flux de données du type DVB caractérisé en ce qu'il contient au moins une information destinée à annoncer un changement de fréquence de l'émetteur du flux.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma général d'un réseau mouvant selon l'exemple de réalisation de l'invention.
La Fig. 2 représente l'enchaînement des actions lors d'un changement de fréquence dans un exemple de réalisation de l'invention.
La Fig. 3 représente un organigramme général du conflit de fréquence dans l'exemple de réalisation de l'invention.

### Exposé détaillé de l'invention

Nous avons vu qu'un réseau mouvant se définit comme un réseau dont l'émetteur est susceptible de se déplacer et se trouve, de ce fait, dans un environnement radio non prévisible et en évolution. Ces réseaux mouvants sont généralement des dispositifs de réémission de services numériques, par exemple selon la norme DVB-H, mais toute autre norme de diffusion radio pose la même problématique de conflit de fréquence pouvant être résolu par l'invention. Ces services numériques sont généralement des services audio et vidéo, par exemple des services télévisuels, destinés à être restitués sur des terminaux. Ces dispositifs de réémission ont, généralement, une autre caractéristique qui est d'être des réseaux que l'on peut qualifier d'écoutants, c'est-à-dire que ces réseaux disposent de moyens de réception radio et sont donc à même d'écouter et de prendre connaissance de leur environnement radio. Au contraire, les émetteurs utilisés généralement dans le cas de réseaux fixes sont de simples émetteurs qui disposent des services à émettre sur des moyens de stockage. Ils n'ont généralement pas de moyens de réception radio. Bien évidemment les caractéristiques de réseaux mouvants et écoutants, bien que généralement liés, ne le sont pas techniquement et un réseau peut être mouvant sans être écoutant, comme à l'inverse un réseau fixe peut être écoutant.
Ces notions sont orthogonales. L'exemple de réalisation de l'invention se place dans le cadre d'un réseau mouvant et écoutant.

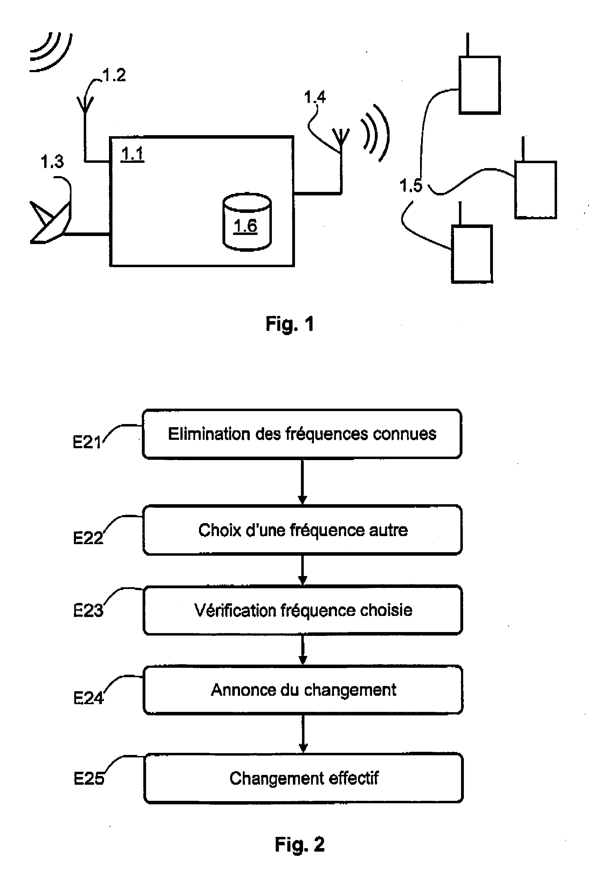

Le schéma de base d'un tel réseau est illustré Fig. 1. On y voit l'émetteur, référencé 1.1. Cet émetteur reçoit des services numériques, généralement audio et vidéo, par une antenne de réception 1.2. De manière optionnelle il peut recevoir également des services par d'autres moyens de réception, par exemple une antenne de réception satellite 1,3 peut lui être connectée. Il peut aussi être doté de moyens de stockage, référencés 1.6, lui permettant de stocker et de diffuser des programmes spécifiques. Ces moyens de stockage peuvent également servir à mémoriser le plan des fréquences connues pour être utilisées. Tous ces programmes sont émis par une antenne de diffusion 1.4 à destination de terminaux 1.5 généralement mobiles.

Un conflit de fréquence se produit lorsque deux émetteurs définissant deux réseaux différents se trouvent à émettre deux flux de données différents sur la même fréquence avec un recouvrement de leurs zones de réception. Dans ce cas, un terminal situé dans la zone de recouvrement ne sera en mesure de recevoir correctement aucun des deux flux. Les deux émetteurs vont se brouiller l'un l'autre.

Lorsqu'un tel conflit se produit entre deux réseaux, la première chose à faire est de le détecter. En effet, autant il est facile de détecter le brouillage au niveau du terminal n'arrivant plus à recevoir correctement le flux désiré, autant la détection n'est pas forcément évidente pour les émetteurs.

En particulier, un émetteur non écoutant ne sera pas en mesure de détecter par lui-même un conflit qui devra lui être signalé par un dispositif extérieur. Un réseau écoutant, par contre, peut détecter le signal émis par le réseau interférent. Nous appelons réseau interférent, vu par un réseau lors d'un conflit de fréquence, l'autre réseau impliqué dans le conflit. Un conflit peut aussi être détecté par analyse statique de plans de fréquence confrontés à la connaissance de son emplacement géographique. Un train peut, par exemple, savoir que sur une ligne donnée, entre deux points, il sera en conflit de fréquence avec un émetteur fixe. Pour ce faire, chaque réseau peut embarquer un plan des fréquences connues pour être utilisées. Ces fréquences comprendront les fréquences des émetteurs fixes dans la région où le réseau mouvant est amené à se déplacer. Il est évident que toute technique de détection du conflit peut ici s'appliquer.

Dans DVB, outre les services numériques, le flux transporte des informations de signalisation. Ces informations de signalisation appelées SI/PSI sont transportées sous la forme de tables contenant des données qui peuvent être regroupées sous la forme de structures de données appelées descripteurs. Ces tables sont ensuite découpées en paquets de données de transport et multiplexées dans le flux périodiquement. Ces tables sont donc diffusées périodiquement, c'est le mécanisme connu sous le nom de carrousel.

L'invention repose, entre autres, sur l'utilisation de ce mécanisme, ou de tout autre mécanisme pouvant remplir la même fonction dans le cas d'une diffusion non basée sur DVB, pour annoncer au sein du flux la nature du réseau et ses propriétés. En effet, pour résoudre le conflit, il est utile de pouvoir connaître la nature du réseau interférent, en particulier pour en déduire s'il a, ou non, la capacité de pouvoir changer de fréquence.

L'exemple de réalisation de l'invention repose sur l'utilisation d'un nouveau descripteur, appelé « Mobile_network_descriptor », utilisé pour signaler dans le flux la nature de réseau mouvant du réseau émettant ledit flux. De cette façon, tout dispositif recevant le flux est en mesure de prendre connaissance de la nature de réseau mouvant du réseau émetteur.

En particulier, tout réseau en conflit de fréquence avec le réseau émetteur sait que, s'agissant d'un réseau mouvant, celui-ci est à même de changer de fréquence pour résoudre le conflit. Ce descripteur possède donc, de par l'information qu'il contient, l'effet technique de permettre à un dispositif récepteur d'identifier la nature du réseau émetteur. Il possède donc une information relative à cette nature permettant de déduire la capacité du réseau émetteur à changer de fréquence.

Bien évidemment, l'utilisation d'un descripteur particulier n'est pas indispensable, dans la mesure où une information relative à la nature du réseau est émise dans le flux. Il peut s'agir, par exemple, d'un simple champ rajouté dans un descripteur ou une table existante.

Dans le cas où le réseau de diffusion n'est pas basé sur DVB, tout moyen approprié d'émettre dans le flux une telle information sur la nature du réseau peut être utilisé à cette fin. L'important est de pouvoir déduire de cette information la capacité, ou non, du réseau à opérer un changement de fréquence.

Si l'on se place, donc, du point de vue d'un réseau mouvant détectant un conflit de fréquence, il faut commencer par tenter de déterminer la nature du réseau interférent. Pour ce faire, le réseau mouvant va tenter la réception du flux émis par le réseau interférent pour chercher dans ce flux la présence de l'information relative à la nature du réseau interférent. En l'espèce, dans l'exemple de réalisation de l'invention ici décrit, le réseau mouvant va chercher la présence d'un descripteur «Mobile_network_descriptor» dans le flux du réseau interférent. S'il le trouve, il en déduit que le réseau interférent est également un réseau mouvant et qu'il est donc susceptible de changer de fréquence. Alternativement, le descripteur contient une information relative à la capacité de l'émetteur de changer de fréquence en cas de conflit. Dans le cas où ce descripteur est absent, on en déduit que le réseau interférent n'est pas un réseau mouvant et on assume dans ce cas qu'il ne peut pas changer de fréquence et que c'est donc au réseau mouvant, détectant le conflit, de tenter un changement de fréquence pour résoudre ce conflit. La même assomption est également faite dans le cas où l'on n'arrive pas à recevoir le flux du réseau interférent et que l'on n'est donc pas en mesure de déduire, des informations présentes dans ce flux, la nature de ce réseau.

Dans le cas où l'on détermine que le réseau interférent est également un réseau susceptible de changer de fréquence, il est inutile que les deux réseaux changent de fréquence. En conséquence, dans un mode de réalisation préférentiel de l'invention, une étape d'élection du réseau devant changer de fréquence est effectuée. Il s'agit d'une méthode qui est effectuée sans communication entre les deux émetteurs des deux réseaux en conflit. Il faut donc déterminer une méthode qui donnera le même résultat de l'élection pour les deux émetteurs. Dans un mode particulier de réalisation de l'invention on élira, par exemple, le réseau dont l'identifiant de réseau (« Network ID » en anglais) est le plus élevé, ou encore, le plus petit.
Il est évident que toute méthode permettant de choisir l'un des deux réseaux et donnant le même résultat, c'est-à-dire permettant d'élire le même réseau qu'elle soit exécutée par le premier réseau ou par le réseau interférent, peut être utilisée.

Lorsqu'un conflit de fréquence se produit, sa solution réside généralement dans le changement de fréquence d'émission par l'un des deux réseaux en conflit. Nous partirons du principe que au moins le réseau implémentant la méthode est capable de changer de fréquence d'émission. Ce réseau va donc initialiser une étape de changement de fréquence dans tous les cas, sauf dans le cas où il a pu déterminer que le réseau interférent est également capable de changer de fréquence et que l'étape d'élection a conduit à déterminer que seul l'autre réseau doit changer de fréquence.

Ce changement de fréquence, illustré Fig. 2, commence par une étape de détermination de la nouvelle fréquence à utiliser. Par exemple, l'émetteur commencera par éliminer toutes les fréquences qu'il connait, de par son plan de fréquence, comme étant utilisées, c'est l'étape E21. Ensuite, parmi les fréquences potentiellement libres, il en choisit une, étape E22. Ce choix peut être aléatoire, ou encore être la fréquence libre de la fréquence la plus basse dans la bande, etc. Cette fréquence doit obligatoirement être comprise dans la bande de fréquence réservée à la diffusion des services numériques, soit pour DVB-H généralement la bande UHF/VHF. De manière préférentielle, une étape de vérification de la fréquence aura lieu de façon à vérifier que cette fréquence est bien libre avant le changement de fréquence, étape E23.

Il est bien entendu que ce changement de fréquence fait référence aux fréquences libres relatives à la régulation du pays où se trouve le système. Il est possible, par exemple, d'écouter cette fréquence pendant un intervalle de temps suffisant. Ce temps est mis à profit pour récupérer, par exemple, des bits TPS, afin de déterminer s'il s'agit bien d'un système DVB ou une simple vérification de la présence d'une porteuse peut s'avérer suffisante. L'intérêt de récupérer les bits TPS est de permettre, grâce aux données SI/PSI, de connaître la largeur de bande de la fréquence: 2k, 4k, 8k, de façon à vérifier qu'aucun émetteur n'émet sur cette fréquence. Une fois qu'une fréquence libre est choisie, le changement de fréquence est annoncé aux terminaux, étape E24. Cette annonce peut, par exemple, prendre la forme d'un descripteur utilisé à cette fin et introduit dans le flux.
Dans l'exemple de réalisation, un descripteur nommé « Automatic_handover_descriptor » est introduit dans le flux pour prévenir les utilisateurs qu'un changement de fréquence va être déclenché. Ce descripteur contient au moins la fréquence sur laquelle va basculer l'émetteur. Il s'ensuit le changement de fréquence proprement dit, étape E25.

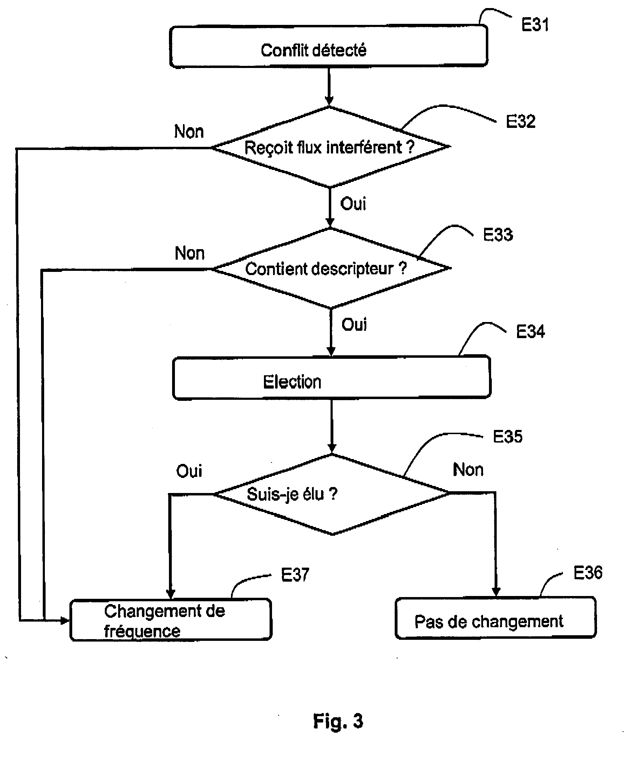

La Fig. 3 reprend le schéma général de la résolution de conflit de fréquence. Une fois le conflit détecté, étape E31, on tente de recevoir et d'écouter le flux interférent à l'étape E32. Si l'on est incapable de recevoir ce flux, ce peut être pour diverses raisons : soit la réception en est trop perturbée, ou encore, l'émetteur interférent ne diffuse pas de flux compatible ou autre. On initie un changement de fréquence, étape E37. Dans le cas où l'on arrive à recevoir le flux, on cherche à identifier un descripteur, par exemple du type « Mobile_network_descriptor », nous permettant de conclure sur la capacité du réseau interférent à effectuer un changement de fréquence, étape E33. En effet, l'invention prévoit qu'un tel réseau émette ce descripteur afin d'annoncer à tout réseau écoutant ledit flux cette fonctionnalité. Si ce descripteur n'est pas détecté, on initie également un changement de fréquence à l'étape E37. Dans le cas où la présence du descripteur, et/ou les informations qu'il contient, nous ont permis de déduire que le réseau interférent est un réseau ayant la capacité de changer de fréquence, on effectue une élection du réseau devant changer de fréquence, c'est l'étape E34. Selon le résultat de cette élection, étape E35, on initie un changement de fréquence à l'étape E37 ou on reste sur la même fréquence, étape E36.

L'homme du métier comprendra que l'invention, bien que décrite dans le cadre de réseau DVB-H, peut également s'appliquer dans tout type de réseau de diffusion unidirectionnel utilisant un nombre de canaux de diffusion limité. Dans le cas où certains émetteurs sont mouvants, c'est à dire mobiles, et qu'ils évoluent dans un environnement où l'utilisation de ces canaux de diffusion ne peut être planifiée, l'invention peut être utilisée pour régler les conflits d'utilisation de ces canaux.

## Revendications

1. Procédé de gestion de conflit de fréquence par un émetteur de services numériques émettant au moins un flux de données selon une première fréquence, cette émission entrant en conflit avec un second émetteur, appelé émetteur interférent, émettant au moins un flux, appelé flux interférent, **caractérisé en ce qu'**il comporte les étapes suivantes :
- une étape (E33) de détermination de la présence d'un descripteur dans le flux interférent signalant l'émetteur interférent comme un émetteur capable de changer de fréquence ;
- dans le cas où la détermination est positive, une étape (E34) d'élection de l'émetteur devant changer de fréquence ;
- dans le cas où la détermination est négative et dans le cas où l'émetteur se retrouve élu, une étape (E37) de changement de fréquence d'émission du flux de données.

2. Procédé selon la revendication 1, où l'émetteur possédant un plan des fréquences connues pour être utilisées, l'étape de changement de fréquence comporte une étape (E22) de choix d'une fréquence non présente dans ce plan comme nouvelle fréquence d'émission.

3. Procédé selon la revendication 2, comportant en outre une étape (E23) de vérification que la nouvelle fréquence d'émission est bien libre.

4. Emetteur de services numériques comportant :
- des moyens d'émission d'au moins un flux de données selon une première fréquence ;
- des moyens de réception d'au moins un flux de données ;
- des moyens de changer la fréquence d'émission du flux ;
**caractérisé en ce qu'**il comporte :
- des moyens de déterminer, lorsque ladite émission sur la première fréquence entre en conflit avec un second émetteur, appelé émetteur interférent, émettant au moins un flux appelé flux interférent, la présence d'un descripteur dans le flux interférent signalant l'émetteur interférent comme un émetteur capable de changer de fréquence;
- des moyens d'élection de l'émetteur devant changer de fréquence lorsque ladite détermination est positive.

5. Structure de données sous la forme d'un descripteur destiné à être inséré dans un flux de données du type DVB **caractérisé en ce qu'**il contient au moins une information relative à la nature du réseau émetteur permettant de déduire la capacité de ce réseau de changer de fréquence.

6. Structure de données sous la forme d'un descripteur destiné à être inséré dans un flux de données du type DVB **caractérisé en ce qu'**il contient au moins une information destinée à annoncer un changement de fréquence de l'émetteur du flux.
